# EUROPEAN PATENT SPECIFICATION

(11) **EP 2 129 061 B1**
(45) Date of publication and mention of the grant of the patent: **07.03.2018**
(21) Application number: 08156992.3
(22) Date of filing: 27.05.2008
(51) Int. Cl.: H04L 12/70

(54) **A system and a method for providing improved quality of a communication service**
System und Verfahren zur Bereitstellung verbesserter Qualität eines Kommunikationsdienstes
Système et procédé d'amélioration de la qualité d'un service de communications

(43) Date of publication of application: 02.12.2009
(73) Proprietor: Deutsche Telekom AG, 53113 Bonn (DE)
(72) Inventor: Xu, Bagnan, 64291 Darmstadt (DE); Bogenfeld, Eckard, 67316 Carlsberg (DE); Grigat, Michael, 64372 Ober-Ramstadt (DE); Siebert, Matthias, 64319 Pfungstadt (DE); Bayer, Nico, 61231 Bad Nauheim (DE); Sivchenko, Dimitry, 64293 Darmstadt (DE); Ross, Andreas, 64354 Reinheim (DE); Hahn, Bernhard, 60437 Frankfurt/M (DE); Robitzsch, Sebastian, 53129 Bonn (DE)
(74) Representative: Vossius & Partner Patentanwälte Rechtsanwälte mbB

(56) References cited:
- EP-A- 1 424 862
- WO-A-2008/049128
- US-A1- 2006 193 295

## Description

### FIELD OF THE INVENTION

The present invention is related to a system and a method for providing improved quality of a communication service, in particular, of a multimedia service over a telecommunication network.

### BACKGROUND OF THE INVENTION

The telecommunication world shows a strong trend on merging of Internet, multimedia, telecommunications. This trend results in a very high challenge on a telecommunication network regarding its efficiency and performance. Although next generation networks, NGN, in particular, next generation mobile network NGMN is being developed and standardized, the existing networks will still be used and maybe coexist with NGN/NGMN for a long time. Even in a new NGN/NGMN resources cannot always meet the ever increasing requirements of new multimedia services. Therefore, how to use the limited network resources for an improved or an optimised user experience is a very important issue for the telecommunication service and network providers.

Within the telecommunication networks access networks are usually the bottleneck of the network resources. With the increasing heterogeneity of access technologies a selection and management of access interfaces of devices to achieve an improved performance for the services are intensively investigated recently. However the mechanisms for the selection of access technologies are based on a simple policy decision so far. For example, the selection of the access technologies may be based on the service types, e.g., Internet via Wireless Local Area Network, WLAN, and Voice via Universal Mobile Telecommunications System, UMTS and Worldwide Interoperability for Microwave Access, WiMAX. Or the selection may simply be based on the connectivity. For example if a user moves out of the WLAN coverage, then it will be connected with the UMTS networks with large coverage. Such simple mechanisms, however, cannot meet the requirements of the future converged multimedia services.

US 2006 193 295 A1 discloses an apparatus for permitting a mobile terminal having multiple, heterogeneous network connections (e.g., multiple wired or wireless transceivers of various types) to set up and maintain simultaneous virtual connections over multiple networks to either the same or to multiple destinations. The mobile terminal can "load-share" traffic, i.e., it can distribute segments of traffic over a full set of heterogeneous networks, significantly improving the reliability and availability of communications. In a first embodiment, a mobile terminal is configured with multiple radio frequency (RF) transceivers. Operating system software is provided for dynamically establishing and maintaining traffic flow for user applications over multiple communications paths, and for automatically adapting to variations in the networking environment, application traffic flow requirements, end user preferences, or mobility. In a second embodiment, a software-defined radio is used to implement the physical layer protocols for each desired network, eliminating the need for multiple transceivers.

### SUMMARY OF THE INVENTION

The object of the present invention is to provide a system and a method for improving quality of a communication service in order to overcome the limitations of technology and prior art.

The object is achieved with the features of the independent claims.

According to a first aspect, the present invention provides a system for providing improved quality of a communication service within communication networks using multiple access technologies as defined in claim 1.

The term "function" is used herein for describing the various components or elements of the system according to the present invention, and is preferably a means or element or software component providing a desired feature or it may also be understood as a programming routine facilitating the required feature. The functions may be distributed within the telecommunication network including the user equipment according to the respective configuration being implemented.

According to preferred aspect of the invention, the resource and admission control function may change the access of the user equipment from a first access node to a second access node when the currently available transport resource has a lower value than a first predetermined resource value and/or said second access node provides a sufficient transport resource for connection of the communication service.

According to preferred aspect of the invention, the resource and admission control function may restrict the traffic of a lower prioritised communication service when a transport resource of higher prioritised communication service is lower than a second predetermined resource value.

According to preferred aspect of the invention, the resource and admission control function may triggers to adapt one or more service parameters according to the current transport resource and/or the user preference according to a predetermined business model.

According to preferred aspect of the invention, the resource and admission control function may terminate a session connection of said communication service when a monitored resource value is below a third predetermined resource value.

According to preferred aspect of the invention, the first, the second and the third predetermined resource value may have the same value.

According to preferred aspect of the invention, the user profile management and authorisation authentication accounting function may inquire the user equipment to reconfigure or change the current interface.

According to preferred aspect of the invention, the user profile management and authorisation authentication accounting function may contain or provide information about which resource management function is responsible for the user equipment.

According to preferred aspect of the invention, the first and the second network connection may be based on the same access technology or on different access technologies.

According to preferred aspect of the invention, the access resource and admission control function comprises a means for managing the network interface.

According to preferred aspect of the invention, the system further comprises a means based on the standard of the network attachment subsystem.

According to preferred aspect of the invention, the means based on the standard of the network attachment subsystem comprises a means for evaluating and controlling the network interface. According to preferred aspect of the invention, the system further comprises a means based on the standard of the resource and admission control subsystem.

According to preferred aspect of the invention, the means based on the standard of resource and admission control subsystem comprises a means for selection of a network interface of the user equipment.

According to another aspect, the invention provides a method for providing improved quality of a communication service within communication networks using multiple access technologies as defined in claim 15.

According to preferred aspect of the invention, a predetermined resource value is a minimal requirement for providing the communication service with a predefined quality.

According to preferred aspect of the invention, wherein the first, the second and the third predetermined resource value may have the same value.

There is a need for a more sophisticated system which may provide improved quality of a communication service, in particular, improved or optimised user experience for a multimedia service.

The present invention includes a management of access technologies such as a dynamic adaptation of the resource reservations, a dynamic adaptation of the quality of service parameter, i.e., QoS parameter during the connection setup, a handover and an active connection phase. The advantages of the present invention in comparison with existing mechanisms are as follows:
▪ Mechanism for the access and resource management according to the present invention may consider more information than that of existing ones. Detailed service parameters, user profiles and even business models maybe taken into consideration to improve or optimise the access and resource management.
▪ Interaction and adaptation of the network resources to the service parameters may be done during the active connection phase to enable the improved user experience, especially for the multimedia applications.
▪ Usage of the network resources may be significantly improved based on the service requirements, user profiles and business models.

A preferred embodiment of the present invention is based on the NGN standard of the Telecoms Internet converged Services and Protocols for Advanced Networks, TISPAN of the European Telecommunications Standards Institute, ETSI

A preferred embodiment of the present invention provide an extended Network Attachment Subsystem, NASS architecture with Interface Evaluation and Control Function, IECF, and an extended Access Resource and Admission Control Function, A-RACF, with Interface Management Function, IMF.

### BRIEF DESCRIPTION OF DRAWINGS

- Fig. 1: is a functional architecture according to a preferred embodiment of the present invention,
- Fig. 2: is a logic flow chart according to a preferred embodiment of the present invention,
- Fig. 3: is a preferred embodiment of the present invention based on ETSI TISPAN NGN architecture,
- Fig. 4: is an extended NASS architecture with IECF according to a preferred embodiment of the present invention,
- Fig. 5: shows a message sequence charts, MSC of session establishment according to a preferred embodiment of the present invention,
- Fig. 6: shows a quality of service, QoS, threshold matrix according to a preferred embodiment of the present invention, and
- Fig. 7: shows a MSC of a handover according to a preferred embodiment of the present invention.

### DETAILED DESCRIPTION OF THE INVENTION

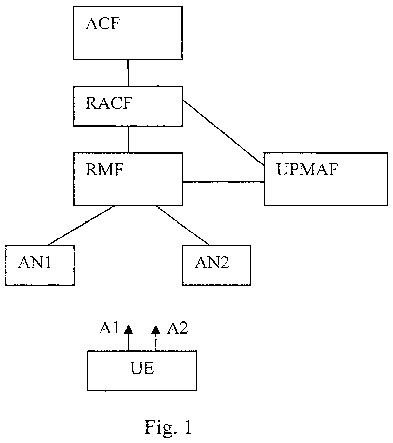

The system according to the present invention preferably comprises at least a part of the following entities as shown in Fig. 1:
▪ a user equipment, user equipment, with one or multiple access interfaces, A1, A2, ...
▪ at least one access node, AN
▪ a resource management function collecting resource information of access technologies, RMF
▪ a resource and admission control function, RACF
▪ a user profile management and authorisation authentication accounting function, UPMAF
▪ an application control function, ACF

One of the preferred aspects of the present invention is described as follows. The information about access nodes to which network interfaces of the user equipment may be connected is stored in the UPMAF. Furthermore, the UPMAF is able to evaluate configured interfaces within the user equipment. Based on the evaluation result, the UPMAF may ask the user equipment to reconfigure the current interface or to change the interface. After receiving the service requirements from application control function, the resource and admission control function gets this information from the UPMAF to know which resource management function is responsible for the user equipment for the connections. The resource and admission control function will then ask the resource management function for the situation of the network resources. The resource management function informs the resource and admission control function about the actual resource information of access nodes that may be used to provide the connection for the user equipment. Based on this information together with the user preferences and service requirements extracted from the UPMAF the resource and admission control function decides whether to accept the connection or not. If the connection is accepted, then resource and admission control function selects the most suited access node (if multiple access nodes are available) and asks the resource management function to reserve the transport resources on the selected access node and to monitor the resource during the connection.

If the resource situation changes during the connection, the resource management function informs the resource and admission control function. The resource and admission control function preferably takes the following actions according to the network resource information, user profile and business model:
▪ Change to another access technology of the user equipment under the conditions that another access interface is available and has better resource situation there, and the user is willing to change based on its profile or agreement as well.
▪ Restrict best effort traffic of other connections on the same access node if any in the case that the reserved transport resource is not enough.
▪ Trigger adaptation of the service parameters to reduce or increase the resource requirements to achieve the best user experience.
▪ Terminate the connection if no other suited access technology is available.

The resource management function monitors the resource by sending an inquiry message to an access node to ask the information about the resource situation or by receiving the reports sent by the access node actively. The resource management function needs to send a message to resource and admission control function if the required resource for the active connection cannot be met due to the following situations:
▪ The access link may be wireless and the quality of the wireless link of the active connection changes, e.g. due to the mobility of the user equipment.
▪ The resource is shared among users. If more users are active and the resource cannot be allocated to the connection as required.

The resource management function may send a message to the resource and admission control function also if the resource situation becomes better for the active or current connection or if a better link has been found for the active connection. In this case the quality of the connection may be improved by allocating more resource for the connection. Based on this enhanced connection quality the service quality could be improved as well, e.g. providing a video with higher resolution.

After getting the information on the reduced or increased resource situation from the resource management function , the resource and admission control function communicates with the UPMAF to check the user profile and its preference based on the business model. If the user equipment has a better link with another interface of the user equipment or another access node with the same interface due to the user equipment mobility, then the connection will be handed over to the new link if the user is allowed to do so according to its profile and preference. If it is unclear, whether the user is willing to handover to a new link according to the user profile, the user will be asked to confirm. In the case that the user has another interface which is not connected to the network and according to the resource management function another access node has a better resource situation, the user will be informed to activate its interface.

In case that the resource and admission control function cannot find a better interface or access node for the user equipment, the resource management function checks whether this service has a high priority. If yes, the resource management function checks the possibility whether any best effort traffic may be restricted to allocate more resources needed for the prioritised service. If the service has no priority or there is no best effort traffic to limit, the resource and admission control function may try to adapt the service parameters, e.g. codec for the video, to reduce the required resource if the user is willing to do so based on the user profile and user preference after consulting with the UPMAF.

In case the service parameters need to be adapted due to the improved or reduced resource situation, the resource and admission control function allocates the resource in advance and asks the ACF to send a message to inform the user equipment about newly available QoS transport resources. The user equipment has the opportunity to accept or reject the adaptation. If the user equipment accepts the adaptation, then the user equipment sends a message to the corresponding session party, e.g. an application server, to change service parameters and the UPMAF to carry out accounting correspondingly.

The application control function may not initiate any further resource reservations since the resources for the session have already been reserved by the resource and admission control function. If the user equipment does not want to change the service parameters, then it may ask the resource and admission control function to terminate the connection.

If the resource and admission control function cannot find a suited link for the connection any more or the user equipment becomes disconnected, the resource and admission control function informs the application control function to terminate the session immediately by sending appropriate messages to the user equipment and the corresponding session parties as well as to the UPMAF to carry out accounting correspondingly.

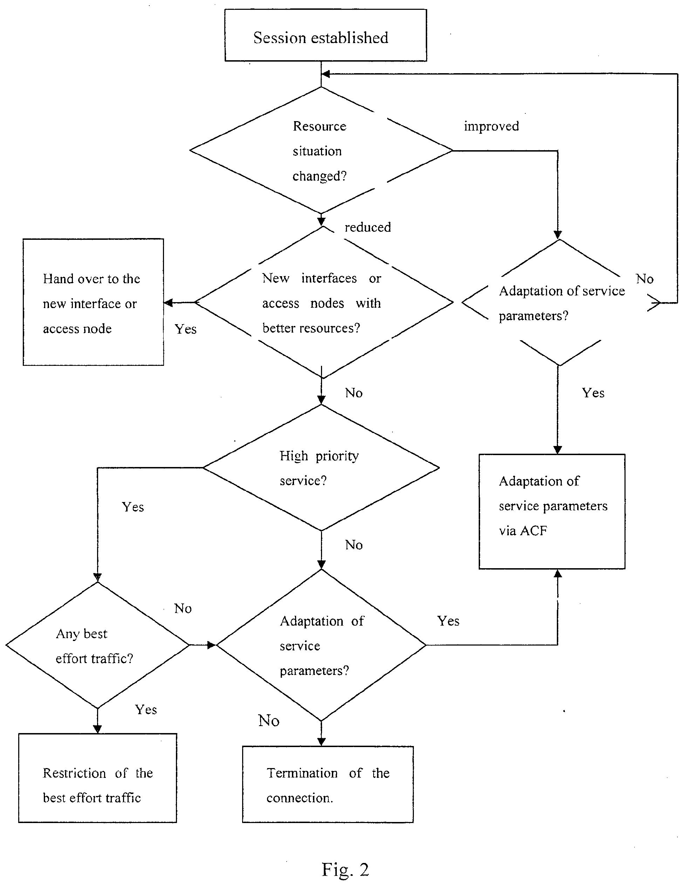

The above mentioned preferred method according the present invention is illustrated in Fig. 2.

### PREFERRED EMBODIMENT

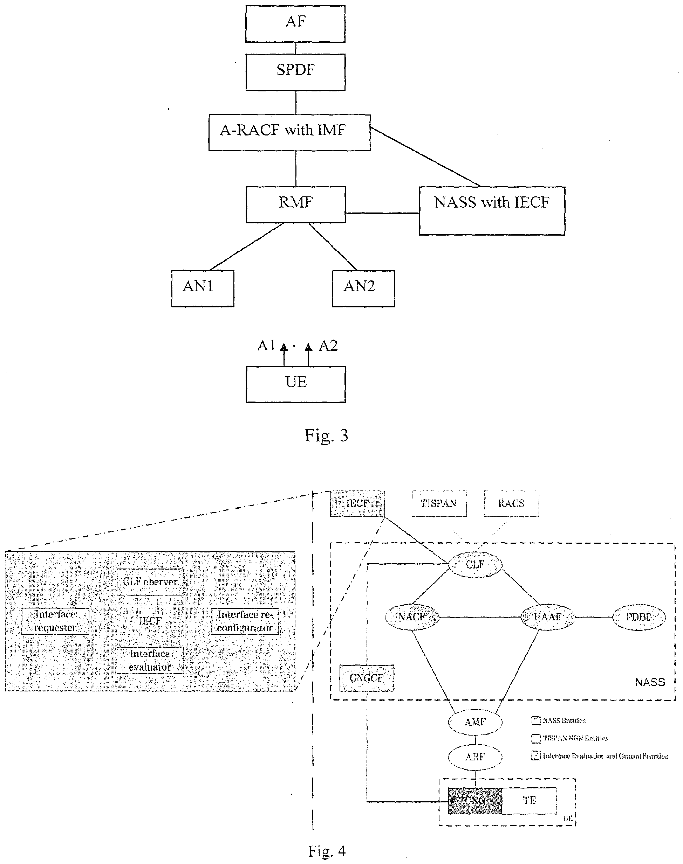

Fig. 3 shows a preferred embodiment according to the present invention. This embodiment is based on the ETSI TISPAN NGN architecture. The Application Function, AF of the ETSI TISPAN Architecture may be used as application control function. The Access Resource and Admission Control Function, A-resource and admission control function may be extended with Interface Management Function, IMF and the Network Attachment Subsystem, NASS may be extended with Interface Evaluation and Control Function, IECF. The IP Multimedia Subsystem, IMS may be then used on the signalling plane to manage sessions.

Before a user is able to get access to any service, such as E-Mail or Internet Protocol television, IPTV, the user connects to the access network. The access control mechanisms may be provided by functionalities described within NASS. If a user equipment connects to the access network the Access Relay Function, ARF is able to insert locality information within the access request and forward the request to the Access Management Function, AMF. The AMF translates access network specific access request into NASS compliant format, e.g. Remote Authentication Dial In User Service. RADIUS protocol or Diameter protocol and sends translated access requests to the User Access Authorisation Function, UAAF. In conjunction with the Profile Database Function, PDBF the UAAF carries out user equipment authentication and authorisation. For that purpose the PDBF contains all relevant user equipment AAA data and user equipment profiles. The UAAF server comprises the PDBF user authentication data. In case of successful authentication and network access authorisation user equipment configuration takes place. The user equipment obtains IP address from the Network Access Configuration Function, NACF forwarded by the AMF. Additional configuration information may be provided by the Customer Network Gateway Configuration Function, CNGCF to the Customer Network Gateway, CNG of the user equipment, such as firewall settings. Preferably, all NASS provided user equipment information is stored within the Connectivity Session Location and Repository Function (CLF), such as IP address of the user equipment, location based information or user QoS profiles. With regard to service and QoS provisioning the CLF provides interfaces to a service control subsystem and applications, e.g. IMS as well as to the RACS.

In one of the preferred embodiments according to the present invention, the NASS is extended by the Interface Evaluation and Control Function, IECF to obtain detailed information about network interfaces of the system. After successful network access authentication the information of all active or current interfaces and connected interfaces within user equipment may be sent to the IECF of the NASS. The interface details are described by a Device and Interface Description, DID in a short and structured way. The DID classifies devices, i.e., user equipments and interfaces concerning its properties and characteristics. All interface details described by DID are stored within the NASS. The obtained information of network interfaces of the user equipment may be used to provide an interface pre-selection after the network access authentication or for an interface selection on demand.

If the user equipment is connected to the access network and has no service request, then it has no resource requirements on the access network. In this case the interface pre-selection based on the DID may be used to select the most suited interface according to the user preference even if not all interfaces are connected to access network or access networks and no resource reservation based on A-RACF is done. For that purpose the IECF controls the interface selection depending on the generic interface characteristics and the user preference.

Network interfaces, such as UMTS, WLAN, WiMAX or Ethernet comprise their own generic system capabilities, e.g. maximum bandwidth. The service quality could be usually increased with increasing data throughput of network interface. The detailed information of existing interfaces in the user equipment may be described by the DID, such as type of available interfaces, e.g. WLAN, UMTS or others, relating to its current status of connectivity. The additional information of device interfaces may be provided, even if these interfaces are currently not connected to an access network. After receiving interface information, preferably all interface information based on DID, the IECF carries out evaluation of existing interface capabilities and proposes the user equipment to select the most suited interface as well as device reconfiguration.

One of the purposes of the IECF is to get detailed information of existing interfaces in user equipment, such as the number of available interfaces relating to its current status of connectivity and the type of interface. An enhanced NASS architecture comprising IECF is shown in Fig. 4.

Diameter protocol may be used for the communication between the NASS functions.

After successful user authentication and authorisation the UAAF and NACF may sent user equipment information shown in Table 1 as an example to the CLF using the Diameter protocol. The Subscriber ID, Globally Unique IP Address, Physical Access ID and the Logical Access ID are based on the standard. The Global Unique IP Address is the IP address assigned to each user equipment and is necessary to communicate with the user equipment. Subscriber ID and Globally Unique IP Address are used to identify the attached user and user equipment, respectively. Physical Access ID and Logical Access ID stand for access node parameters to which access node an user equipment is connected to. For sending messages between CNGCF and CNG of user equipment the Physical Access ID and the Logical Access ID are necessary to select relating access node of the user equipment. Trigger information and status information of Interface Evaluation and Control Function are provided as well. For being informed that a message from NASS module A to NASS module B is interpreted successfully by the receiver a new generic variable was declared, the Trigger Code (T_Code). A T_Code comprises a short ASCII string responding whether the sent information was interpreted successfully and failed, respectively, by the receiver. Based on this information every transmitter may react instantly if the receiver may not interpret the data.

**Table 1: Data from NACF/UAAF to CLF via Diameter**

| Parameters | Comment |
|---|---|
| Subscriber ID | User Name |
| Globally Unique IP Address | IP address of UE |
| Physical Access ID | MAC address of AN |
| Logical Access ID | IP address of AN |
| T_Code* | Trigger Code |

As shown in Fig. 4 the developed IECF comprises the following functional modules: "CLF Observer", "Interface Requestor", "Interface Evaluator" and "Interface Re-Configurator". The CLF Observer may monitor all CLF entries. If a new user equipment entry within CLF is recognised, the Interface Requestor may be triggered. Initialized by the Interface Requestor the Interface Request Message, IRM is sent to the specific CNG of the user equipment. For that purpose the Interface Requestor of IECF may send a Diameter message to the CNGCF, which comprises data shown in Table 2. Based on the Subscriber ID, Globally Unique IP Address and Logical Access ID the CNGCF is able to relay the IRM to the desired CNG of the user equipment. The Logical Access ID and Globally Unique IP Address are necessary in case of multiple IP address realm to deliver messages into the proper access node sub-domains and finally to the CNG of the user equipment.

**Table 2: Data from IECF to CNGCF via Diameter**

| Parameters | Comment |
|---|---|
| Subscriber ID | User Name |
| Globally Unique IP Address | IP address of UE |
| Physical Access ID | MAC address of AN |
| Logical Access ID | IP address of AN |
| T_Code* | Trigger Code |

The CNGCF-CNG communication is realised by a Remote Procedure Call, RPC. The CNGCF-CNG communication may be based on XML-RPC. The responded structure includes the information as shown in Table 3. If an user equipment possesses more than one interface the XML-RPC response to the CNGCF may comprise all data of any interface.

**Table 3: Data from CNGCF to CNF via XML-RPC**

| Parameters | Comment |
|---|---|
| Logical Access ID | IP address of AN |
| DID* | Device and Interface Description |
| Interface* | Notation of the interface (e.g. eth0) |
| Type* | Wireless/Wired |
| MAC* | MAC of UE interface |
| Globally Unique IP Address | IP of this interface |

Table 3 contains the DID that describes a specific interface in a short and structured way. Any value may be given as a numeric one and describes fixed information. The absence of any data is described by the numeric value "0". The connected user equipments are very likely completely different related to their operating system, OS and device configurations and the possibility to interpret messages. An example of the structure of the DID is shown as follows:
<DEVICE>-<SUBINFO>_<INTERFACE>:<MODE>

After receiving user equipment interface information from CNG the CNGCF relays the information via the Diameter protocol to the IECF as shown in Table 4. Besides the interface details the T_Code is also added as the response of the IECF IRM. Finally, IECF updates the CLF database with the new interface details of the user equipment.

**Table 4: Data from CNGCF to IECF via Diameter**

| Parameters | Comment |
|---|---|
| Subscriber ID | User Name |
| Logical Access ID | IP address of AN |
| DID* | Device and Interface Description |
| Interface* | Notation of the interface (e.g. eth0) |
| Type* | Wireless/Wired |
| MAC* | MAC of UE interface |
| Globally Unique IP Address | IP of this interface |
| T_Code* | Trigger Code |

The Interface Observer investigates interface data of the user equipment in CLF and compares these with the current used interface. Is the current used interface less suited, the Interface Observer may trigger the Interface Re-Configurator. Initialised by the Interface Re-Configurator the Interface Exchange Message, IEM may be sent to user equipments CNG. This procedure has been realised in a similar way as the IRM procedure for getting interface details of the user equipment. However, the IEM data is different from the IRM data as shown in Table 5.

**Table 5: Data from IECF to CNGCF via Diameter**

| Parameters | Comment |
|---|---|
| Subscriber ID | User Name |
| Globally Unique IP Address | IP address of UE |
| Physical Access ID | MAC address of AN |
| Logical Access ID | IP address of AN |
| T_Code | Trigger Code |
| UE_Interface* | New UE Interface to be changed |
| UE_MAC* | New UE MAC to be changed |

After CNG of the user equipment receives the IEM it responses after successful interface reconfiguration with an IEM-OK message. The CNGCF relays IEM-OK message to the IECF. Due to the fact that the user equipment has changed the current interface the user equipment data within the CLF are not up to date anymore. Thus, finally the IECF updates user equipment data in the CLF.

The IECF of NASS gets the information via Device and Interface Description, which may contain a Media Access Control, MAC list of all network interfaces installed on the user equipment. Based on this information, the functionality of the A-RACF may be extended with IMF that selects the most suited access node for the demanding user equipment in case it has multiple interfaces connected to the network.

During session establishment the AF of the IMS core generates a new Authorisation and Authentication Request, AAR over the in ETSI TISPAN RACS specification defined Gq' interface to the Service Policy Decision Function, SPDF. After the standard check whether the user equipment is allowed to have the desired service, the SPDF forwards the AAR to the A-RACF. The A-RACF firstly contacts the NASS using Interface Description Request, IDR to retrieve connectivity information about all network interfaces available on the user equipment. The NASS answers with Interface Description Answer, IDA message informing the A-RACF about the user profile with user subscriptions. Additionally the IDA contains information about all interfaces of the user equipment and to which access nodes the interfaces are currently connected. The A-RACF performs a usual check whether the QoS requirements of the new session are supported by the user profile. After that check the A-RACF contacts the resource management function to retrieve information about QoS situation at the access nodes to which the user equipment is currently connected. Based on the information in the IDA, the A-RACF knows which resource management function has to be contacted to get information about transport resources available for the user equipment. The selection process carried out by the IMF may also consider interfaces that are currently not connected to an access network, based on the information of NASS provided by IECF.

Information exchange between the A-RACF and the resource management function may be realised using a DIAMETER interface. Following messages may be used on that interface:
- QoS Level Request, QLR: A-RACF→RMF to estimate available resources for a user equipment.
- QoS Level Answer, QLA: RMF→A-RACF to inform it about QoS.
- Link Observation Request, LOR: A-RACF→RMF to setup a link observation for a user equipment.
- Link Status Indication (LSI): RMF→A-RACF to indicate available QoS level for the user equipment at an access node.

The A-RACF sends QLR message to the resource management function to retrieve information about QoS levels available for the user equipment at all access nodes. The resource management function functionality for an IEEE 802.16, i.e., WiMAX based access node with OFDM physical layer may be realised as follows.

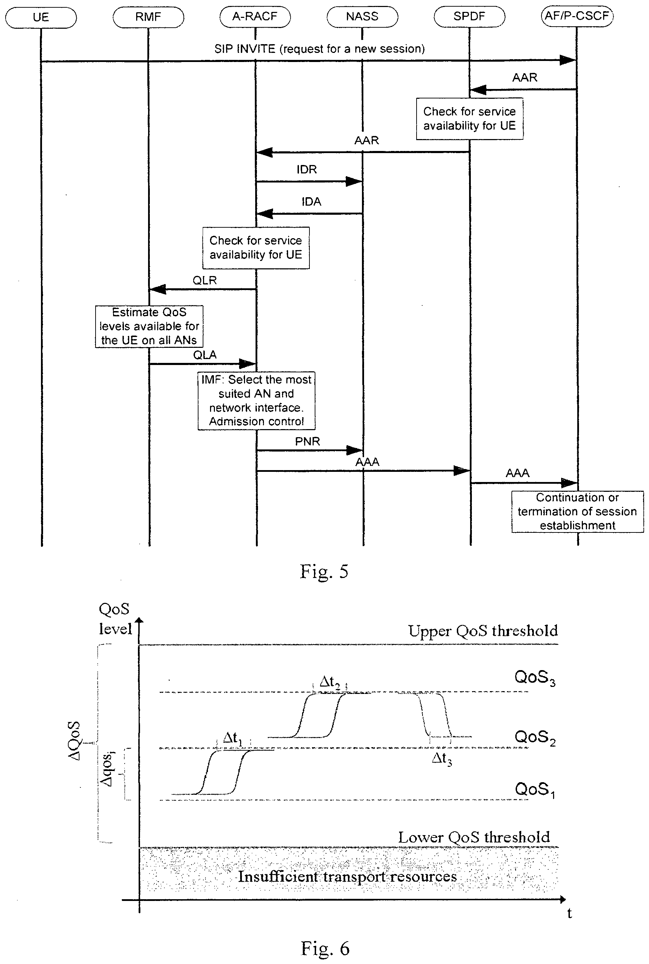

In order to estimate the available QoS level for the user equipment connected to the access node, the resource management function observes transport resources available for the user equipment at the access node. The transport resources of the WiMAX access node may be calculated based on free OFDM symbols which may be assigned to requesting user equipments for data transmissions. The resource management function estimates the number of free OFDM symbols in every frame and gets the information about the modulation coding scheme of the user equipment used in the uplink and downlink. According to this information the resource management function may calculate transport resources in bit rates available for the user equipment in the uplink and downlink. Considering particularities of the used scheduling algorithm at the access node the packet delay may also be calculated. Summarizing the evaluated bit rate and packet delay the QoS level available for the user equipment may be estimated. The resource management function answers with a QLA message to the A-RACF. In the QLA message the estimated QoS levels at all access nodes are contained. According to this information the IMF of the A-RACF may select the access node that may be used for the session. The A-RACF now knows which interface of the user equipment has been selected for the session. If it is not the actual active interface of the user equipment, the active interface may be switched to the selected one. To switch the active interface of the user equipment, the A-RACF sends to the NASS a Push Notification Request (PNR) with information about the MAC address of the new active interface. The IECF of the NASS that knows about all available interfaces on the user equipment sends an Interface Update Request, IUR message with the new MAC address to the user equipment. After that the user equipment configures the assigned interface with the indicated MAC and IP addresses and releases all previous IP assignments of the old interface. At the end of the resource reservation process the A-RACF sends Authorisation and Authentication Answer, AAA message via SPDF to the AF of the IMS so that session establishment may be continued or stopped according to the result of the admission control. Fig. 5 shows the message sequence chart, MSC of the session establishment.

After the resource reservation process, the A-RACF sends a Link Observation Request (LOR) to the resource management function to monitor the reserved transport resources on the selected access node. If the available resource parameters for the user equipment change, the resource management function may indicate it to the A-RACF using Link Status Indication (LSI) message. The thresholds at which the resource management function informs the A-RACF about QoS level modifications are calculated at the resource management function. Fig. 6 shows a QoS threshold matrix calculated at the resource management function. The hysteresis may be introduced to avoid ping-pong effect of LSI messages sent to the A-RACF.

The interval ΔQoS with upper and lower QoS thresholds may be set by the user equipment during session establishment, where the hysteresis step Δqosi within ΔQoS depends e.g. on the used media codec and may be calculated by the resource management function itself after reception of the LOR message wherein the information about codec type is contained. The hysteresis step Δqosi is the difference between two predetermined resource values for the corresponding service quality levels. The upper QoS threshold indicates the QoS level which the user desires to have for the session while the lower QoS threshold indicates the minimal QoS level at which the user accepts the session. The values of Δti may also be calculated by the resource management function and may vary for each Δqosi. The value Δti is the time needed to avoid instable changing of a hysteresis step Δqosi. In the example as shown in Fig. 6 three intermediate QoS levels between the lower and upper QoS thresholds have been used by the resource management function. Assuming that the session has been established with a reservation of the transport resources for a lower QoS threshold, a LSI message to the A-RACF indicating the actual available transport resources of QoS1 will be generated when the resource management function observes available transport resources achieving a QoS2 level for the time Δt1. The resource management function informs the A-RACF the QoS2 level if available transport resources for the user equipment achieve the QoS3 level for the time Δt2. A LSI message to the A-RACF may also be generated if available transport resources are reduced to the QoS2 level of the user equipment for the time Δt3. Using such a hysteresis it may be ensured that the maintained multimedia sessions of the MN will not be disturbed as to the sufficient reservation of the transport resources.

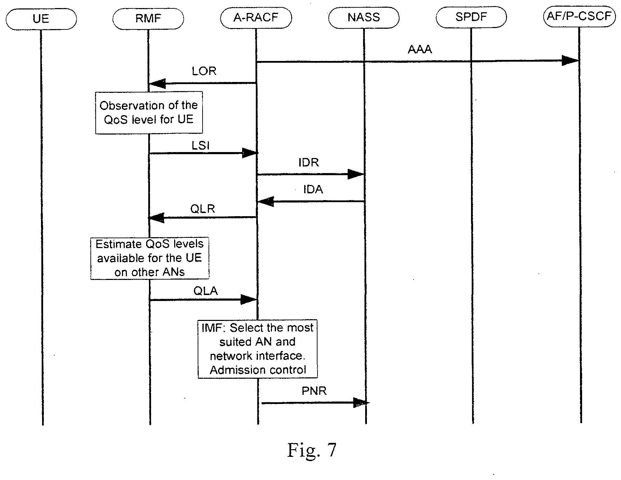

If the available transport resources for the user equipment are reduced the LSI message will be sent to the A-RACF as well. The A-RACF may then try to find another access node that is more suited for the user equipment to continue the maintained session. The selection of the new interface may be done in the same way as for the session establishment. Fig. 7 shows the MSC of the handover when the IMF of the A-RACF finds another access node that may provide a better QoS level for the user.

If the A-RACF detects that there is no better access node for the user equipment that may provide a better QoS level, the session adaptation process may be initiated. For that the A-RACF sends a Session State Indication (SSI) message to the AF via the SPDF. The AF sends this information, e.g., a SIP message with code 371 may be used for that, to the user equipment. Newly available QoS level is contained in this message. The user equipment exchanges then messages with the other session party, e.g., a video server, to adapt the session QoS parameters to the newly available transport resources.

Alternatively the A-RACF may initiate a session termination process by sending an Abort Session Request, ASR message to the SPDF. The SPDF forwards the ASR to the AF so that the IMS core may send SIP BYE messages to both session parties to terminate the maintained session.

If the available QoS resources increase, the resource management function may generate LSR notification messages to the A-RACF. The A-RACF may inform then the user equipment about new available resources via the AF. The user equipment decides whether the service parameters should be adapted.

The present invention has now been described with reference to several embodiments thereof. The foregoing detailed description and examples have been given for clarity of understanding only. No unnecessary limitations are to be understood therefore. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the systems and methods herein.

## Claims

1. A system for managing a communication service within communication networks using multiple access technologies, the communication service being used by a user equipment comprising at least one network interface, wherein the system comprises:
at least a first and a second access node and one resource management function being adapted to monitor a network resource information of one or more access nodes, wherein the user equipment is connected with and has access to the first access node;
**characterized by** further comprising
a user profile management and authorisation authentication accounting function being adapted for storing information about a user profile and a connectivity parameter of the network interface of the user equipment,
an application control function being adapted for providing a service requirement information,
a resource and admission control function being adapted for receiving the service requirement information from the application control function, and for inquiring the network resource information from the resource management function;
wherein the resource management function, the user profile management and authorisation authentication accounting function, the application control function, and the resource and admission control function being provided on the access network side;
wherein the resource and admission control function is adapted to communicate with the user profile management and authorisation authentication accounting function before the user equipment contacts the second access node, to select an access node for the network connection of the user equipment from the first access node and the second access node based on the service requirement information and the network resource information, and to reserve a transport resource available for the user equipment on the selected access node.

2. System according to claim 1, wherein the resource and admission control function is adapted to initiate a changeover of the access of the user equipment from the first access node to the second access node when the currently available transport resource has a lower value than a first predetermined resource value and/or said second access node provides more transport resource for connection of the communication service than the currently available transport resource.

3. System according to any one preceding claims, wherein the resource and admission control function is adapted to restrict the traffic of a lower prioritised communication service when a transport resource of higher prioritised communication service is lower than a second predetermined resource value.

4. System according to any one preceding claims, the resource and admission control function is adapted to trigger to adapt a service parameter according to the current transport resource and/or the user preference according to a predetermined business model described in service parameters.

5. System according to any one preceding claims, the resource and admission control function is adapted to terminate a session connection of said communication service when a monitored resource value is below a third predetermined resource value.

6. System according to claims 3 or 5, wherein the first, the second and the third predetermined resource value have the same value.

7. System according to claim 2, wherein the first and the second network connections are based on the same access technology or on different access technologies.

8. System according to any one preceding claims, wherein the user profile management and authorisation authentication accounting function is adapted to inquire the user equipment to reconfigure or change the current interface.

9. System according to any one preceding claims, wherein the user profile management and authorisation authentication accounting function is adapted to contain information about which resource management function is responsible for the user equipment.

10. System according to any one preceding claims, wherein the access resource and admission control function comprises a means for managing the network interface.

11. System according to any one preceding claims further comprises a network attachment subsystem based on the Network Attachment Subsystem, NASS, defined by the European Telecommunications Standard Telecommunications and Internet converged Services and Protocols for Advanced Networking.

12. System according to claim 11, wherein the network attachment subsystem comprises a means for evaluating and controlling the network interface.

13. System according to any one preceding claims further comprises a resource and admission control subsystem based on the Resource and Admission Control Subsystem, RACS, defined by the European Telecommunications Standard, Telecommunications and Internet converged Services and Protocols for Advanced Networking.

14. System according to claim 13, wherein the user equipment comprises a plurality of network interfaces and the resource and admission control subsystem comprises a means for selection of a network interface from the plurality of network interfaces for the communication service.

15. A method for managing a communication service during a network or session connection within communication networks having at least a first and a second access node and using multiple access technologies, the communication service being used by a user equipment comprising at least one network interface, wherein the user equipment is connected with and has access to the first access node wherein the method comprises the step of:
monitoring available network resources for the network or session connection being usable for said communication service by a resource management function;
**characterized by**
storing information about a user profile and a connectivity parameter of a network interface of a user equipment, by a user profile management and authorisation authentication accounting function;
providing a service requirement information by an application control function;
receiving the service requirement information from the application control function and inquiring the network resource information from the resource management function, by a resource and admission control function;
communicating with the user profile management and authorisation authentication accounting function by the resource and admission control function before the user equipment contacts the second access node, selecting of an access node for the network connection of the user equipment from the first access node and the second access node based on the service requirement information and the network resource information, by the resource and admission control function, and reserving a transport resource available for the user equipment on the selected access node, by the resource management function the resource management function, the user profile management and authorisation authentication accounting function, the application control function, and the resource and admission control function being provided on the access network side.

16. Method according to claim 15 further comprises steps of:
initiating a changeover from the first access node to the second access node when the currently available transport resource has a lower value than a first predetermined resource value and/or said second access node provides more transport resource for connection of the communication service than the currently available transport resource; and/or
restricting the traffic of a lower prioritised communication service when a transport resource of higher prioritised communication service is lower than a second predetermined resource value; and/or
adapting a service parameter according to the current transport resource and/or the user preference according to a predetermined business model described in service parameters; and/or
terminating a session connection of said communication service when a monitored resource value is below third predetermined resource value.

17. Method according to claims 15 or 16, wherein a predetermined resource value is a minimal requirement for providing the communication service with a predefined quality.

18. Method according to any one of claims 15-17, wherein the first, the second and the third predetermined resource value have the same value.

19. Method according to any one of claims 15-18, wherein the first and the second network connections are based on the same access technology or on different access technologies.

20. Method according to any one of claims 15-19, wherein the method further comprises a step of inquiring the user equipment to reconfigure or change the current interface, by the user profile management and authorisation authentication accounting function.

21. Method according to any one of claims 15-20, wherein the user profile management and authorisation authentication accounting function contains information about which resource management function is responsible for the user equipment.

22. Method according to any one of claims 15-21, wherein the access resource and admission control function comprises a means for managing the network interface.

23. Method according to any one of claims 15-22, wherein method further comprises a step of evaluating and controlling the network interface by a network attachment subsystem based on the European Telecommunications Standard, Telecommunications and Internet converged Services and Protocols for Advanced Networking.

24. Method according to any one of claims 15-23, wherein the user equipment comprises a plurality of network interfaces, and wherein method further comprises a step of selecting of a network interface from plurality of network interfaces for the communication service by a resource and admission control subsystem based on the European Telecommunications Standard, Telecommunications and Internet converged Services and Protocols for Advanced Networking.

## Patentansprüche

1. System zum Managen eines Kommunikationsdienstes innerhalb von Kommunikationsnetzwerken, die mehrere Zugangstechniken verwenden, wobei der Kommunikationsdienst durch ein Benutzergerät genutzt wird, das mindestens eine Netzwerkschnittstelle aufweist, wobei das System aufweist:
mindestens einen ersten und einen zweiten Zugangsknoten und eine Ressourcenmanagementfunktion, die dazu geeignet ist, eine Netzwerkressourceninformation eines oder mehrerer Zugangsknoten zu überwachen, wobei das Benutzergerät mit dem ersten Zugangsknoten verbunden ist und Zugriff auf den ersten Zugangsknoten hat;
**dadurch gekennzeichnet, dass** das System ferner aufweist:
eine Benutzerprofilmanagement- und Autorisierungs-, Authentifizierungs- und Abrechnungsfunktion, die dazu geeignet ist, Information über ein Benutzerprofil und einen Konnektivitätsparameter der Netzwerkschnittstelle des Benutzergeräts zu speichern;
eine Anwendungssteuerungsfunktion, die dazu geeignet ist, eine Dienstanforderungsinformation bereitzustellen;
eine Resource-and-Admission-Control-Funktion, die dazu geeignet ist, die Dienstanforderungsinformation von der Anwendungssteuerungsfunktion zu empfangen und die Netzwerkressourceninformation von der Ressourcenmanagementinformation abzurufen,
wobei die Ressourcenmanagementfunktion, die Benutzerprofilmanagement- und Autorisierungs-, Authentifizierungs- und Abrechnungsfunktion, die Anwendungssteuerungsfunktion und die Resource-and-Admission-Control-Funktion auf der Seite des Zugangsnetzwerks bereitgestellt werden,
wobei die Resource-and-Admission-Control-Funktion dazu geeignet ist, mit der Benutzerprofilmanagement- und Autorisierungs-, Authentifizierungs- und Abrechnungsfunktion zu kommunizieren, bevor das Benutzergerät Kontakt mit dem zweiten Zugangsknoten aufnimmt, um einen Zugangsknoten für die Netzwerkverbindung des Benutzergeräts vom ersten Zugangsknoten und vom zweiten Zugangsknoten basierend auf der Dienstanforderungsinformation und der Netzwerkressourceninformation auszuwählen und eine für das Benutzergerät auf dem ausgewählten Zugangsknoten verfügbare Transportressource zu reservieren.

2. System nach Anspruch 1, wobei die Resource-and-Admission-Control-Funktion dazu geeignet ist, den Zugang des Benutzergeräts vom ersten Zugangsknoten auf den zweiten Zugangsknoten umzuschalten, wenn die aktuell verfügbare Transportressource einen niedrigeren Wert hat als ein erster vorgegebener Ressourcenwert, und/oder wenn der zweite Zugangsknoten mehr Transportressource für eine Verbindung mit dem Kommunikationsdienst bereitstellt als die aktuell verfügbare Transportressource.

3. System nach einem der vorangehenden Ansprüche, wobei die Resource-and-Admission-Control-Funktion dazu geeignet ist, den Verkehr eines niedriger priorisierten Kommunikationsdienstes zu begrenzen, wenn eine Transportressource eines höher priorisierten Kommunikationsdienstes niedriger ist als ein zweiter vorgegebener Ressourcenwert.

4. System nach einem der vorangehenden Ansprüche, wobei die Resource-and-Admission-Control-Funktion dazu geeignet ist, getriggert zu werden, um einen Dienstparameter gemäß der aktuellen Transportressource und/oder der Präferenz des Benutzers gemäß einem in Dienstparametern beschriebenen vorgegebenen Geschäftsmodell anzupassen.

5. System nach einem der vorangehenden Ansprüche, wobei die Resource-and-Admission-Control-Funktion dazu geeignet ist, eine Sitzungsverbindung des Kommunikationsdienstes zu unterbrechen, wenn ein überwachter Ressourcenwert niedriger ist als ein dritter vorgegebener Ressourcenwert.

6. System nach Anspruch 3 oder 5, wobei der erste, der zweite und der dritte vorgegebene Ressourcenwert den gleichen Wert haben.

7. System nach Anspruch 2, wobei die erste und die zweite Netzwerkverbindung auf der gleichen Zugangstechnik oder auf verschiedenen Zugangstechniken basieren.

8. System nach einem der vorangehenden Ansprüche, wobei die Benutzerprofilmanagement- und Autorisierungs-, Authentifizierungs- und Abrechnungsfunktion dazu geeignet ist, das Benutzergerät aufzufordern, die aktuelle Schnittstelle neu zu konfigurieren oder zu ändern.

9. System nach einem der vorangehenden Ansprüche, wobei die Benutzerprofilmanagement- und Autorisierungs-, Authentifizierungs- und Abrechnungsfunktion Information darüber enthält, welche Ressourcenmanagementfunktion für das Benutzergerät verantwortlich ist.

10. System nach einem der vorangehenden Ansprüche, wobei die Access-Resource-and-Admission-Control-Funktion eine Einrichtung zum Managen der Netzwerkschnittstelle aufweist.

11. System nach einem der vorangehenden Ansprüche, ferner mit einem Network Attachment Subsystem, das auf dem durch Telecommunications and Internet Converged Services and Protocols for Advanced Networking des Europäischen Instituts für Telekommunikationsnormen definierten Network Attachment Subsystem, NASS, basiert.

12. System nach Anspruch 11, wobei das Network Attachment Subsystem eine Einrichtung zum Bewerten und Steuern der Netzwerkschnittstelle aufweist.

13. System nach einem der vorangehenden Ansprüche, ferner mit einem Resource-and-Admission-Control-Subsystem, das auf dem durch Telecommunications and Internet Converged Services and Protocols for Advanced Networking des Europäischen Instituts für Telekommunikationsnormen definierten Resource and Admission Control Subsystem, RACS, basiert.

14. System nach Anspruch 13, wobei das Benutzergerät mehrere Netzwerkschnittstellen aufweist und das Resource and Admission Control Subsystem eine Einrichtung zum Auswählen einer Netzwerkschnittstelle von den mehreren Netzwerkschnittstellen für den Kommunikationsdienst aufweist.

15. Verfahren zum Managen eines Kommunikationsdienstes während einer Netzwerk- oder Sitzungsverbindung innerhalb von Kommunikationsnetzwerken, die mindestens einen ersten und einen zweiten Zugangsknoten aufweisen und mehrere Zugangstechniken verwenden, wobei der Kommunikationsdienst durch ein Benutzergerät verwendet wird, das mindestens eine Netzwerkschnittstelle aufweist, wobei das Benutzergerät mit dem ersten Zugangsknoten verbunden ist und Zugriff auf den ersten Zugangsknoten hat, wobei das Verfahren die Schritte aufweist:
Überwachen verfügbarer Netzwerkressourcen für die Netzwerk- oder Sitzungsverbindung, die für den Kommunikationsdienst verfügbar sind, durch eine Ressourcenmanagementfunktion;
**gekennzeichnet durch**:
Speichern von Information über ein Benutzerprofil und einen Konnektivitätsparameter einer Netzwerkschnittstelle eines Benutzergeräts durch eine Benutzerprofilmanagement- und Autorisierungs-, Authentifizierungs- und Abrechnungsfunktion;
Bereitstellen einer Dienstanforderungsinformation durch eine Anwendungssteuerungsfunktion;
Empfangen der Dienstanforderungsinformation von der Anwendungssteuerungsfunktion und Abfragen der Netzwerkressourceninformation von der Ressourcenmanagementinformation durch eine Resource-and-Admission-Control-Funktion;
Kommunizieren mit der Benutzerprofilmanagement- und Autorisierungs-, Authentifizierungs- und Abrechnungsfunktion durch die Resource-and-Admission-Control-Funktion, bevor das Benutzergerät mit dem zweiten Zugangsknoten Kontakt aufnimmt, Auswählen eines Zugangsknotens für die Netzwerkverbindung des Benutzergeräts vom ersten Zugangsknoten und vom zweiten Zugangsknoten basierend auf der Dienstanforderungsinformation und der Netzwerkressourceninformation durch die Resource-and-Admission-Control-Funktion und Reservieren einer für das Benutzergerät verfügbaren Transportressource auf dem ausgewählten Zugangsknoten durch die Ressourcenmanagementfunktion, wobei die Ressourcenmanagementfunktion, die Benutzerprofilmanagement- und Autorisierungs-, Authentifizierungs- und Abrechnungsfunktion, die Anwendungssteuerungsfunktion und die Resource-and-Admission-Control-Funktion auf der Seite des Zugangsnetzwerks bereitgestellt werden.

16. Verfahren nach Anspruch 15, ferner mit den Schritten:
Umschalten vom ersten Zugangsknoten auf den zweiten Zugangsknoten, wenn die aktuell verfügbare Transportressource einen niedrigeren Wert hat als der erste vorgegebene Ressourcenwert, und/oder wenn der zweite Zugangsknoten mehr Transportressource für eine Verbindung des Kommunikationsdienstes bereitstellt als die aktuell verfügbare Transportressource; und/oder
Begrenzen des Verkehrs eines niedriger priorisierten Kommunikationsdienstes, wenn eine Transportressource eines höher priorisierten Kommunikationsdienstes niedriger ist als ein zweiter vorgegebener Ressourcenwert; und/oder
Anpassen eines Dienstparameters gemäß der aktuellen Transportressource und/oder der Präferenz des Benutzers gemäß einem in Dienstparametern beschriebenen vorgegebenen Geschäftsmodell; und/oder
Beenden einer Sitzungsverbindung des Kommunikationsdienstes, wenn ein überwachter Ressourcenwert niedriger ist als ein dritter vorgegebener Ressourcenwert.

17. Verfahren nach Anspruch 15 oder 16, wobei der vorgegebene Ressourcenwert eine minimale Anforderung zum Bereitstellen des Kommunikationsdienstes mit einer vordefinierten Qualität ist.

18. Verfahren nach einem der Ansprüche 15 bis 17, wobei der erste, der zweite und der dritte vorgegebene Ressourcenwert den gleichen Wert haben.

19. Verfahren nach einem der Ansprüche 15 bis 18, wobei die erste und die zweite Netzwerkverbindung auf der gleichen Zugangstechnik oder auf verschiedenen Zugangstechniken basieren.

20. Verfahren nach einem der Ansprüche 15 bis 19, wobei das Verfahren ferner einen Schritt zum Auffordern des Benutzergeräts zum Neukonfigurieren oder Ändern der aktuellen Schnittstelle durch die Benutzerprofilmanagement- und Autorisierungs-, Authentifizierungs- und Abrechnungsfunktion aufweist.

21. Verfahren nach einem der Ansprüche 15 bis 20, wobei die Benutzerprofilmanagement- und Autorisierungs-, Authentifizierungs- und Abrechnungsfunktion Information darüber enthält, welche Ressourcenmanagementfunktion für das Benutzergerät verantwortlich ist.

22. Verfahren nach einem der Ansprüche 15 bis 21, wobei die Access-Resource-and-Admission-Control-Funktion eine Einrichtung zum Managen der Netzwerkschnittstelle aufweist.

23. Verfahren nach einem der Ansprüche 15 bis 22, wobei das Verfahren ferner einen Schritt zum Bewerten und Steuern der Netzwerkschnittstelle durch ein Network Attached Subsystem basierend auf Telecommunications and Internet Converged Services and Protocols for Advanced Networking des Europäischen Instituts für Telekommunikationsnormen aufweist.

24. Verfahren nach einem der Ansprüche 15 bis 23, wobei das Benutzergerät mehrere Netzwerkschnittstellen aufweist, und wobei das Verfahren ferner einen Schritt zum Auswählen einer Netzwerkschnittstelle von mehreren Netzwerkschnittstellen für den Kommunikationsdienst durch ein Resource and Admission Control Subsystem basierend auf Telecommunications and Internet Converged Services and Protocols for Advanced Networking des Europäischen Instituts für Telekommunikationsnormen aufweist.

## Revendications

1. Système de gestion d'un service de communication dans des réseaux de communication utilisant des technologies d'accès multiple, le service de communication étant utilisé par un équipement utilisateur comprenant au moins une interface réseau, lequel système comprend :
au moins un premier et un second noeud d'accès et une fonction de gestion des ressources adaptée pour surveiller des informations de ressources de réseau d'un ou plusieurs noeuds d'accès, dans lequel l'équipement utilisateur est connecté et a accès au premier noeud d'accès ;
**caractérisé en ce qu'**il comprend en outre
une fonction de gestion de profil d'utilisateur et d'autorisation-authentification-comptabilité adaptée pour stocker des informations sur un profil d'utilisateur et un paramètre de connectivité de l'interface réseau de l'équipement utilisateur,
une fonction de contrôle d'application adaptée pour fournir des informations de requête de service,
une fonction de contrôle de ressources et d'admissions adaptée pour recevoir les informations de requête de service de la fonction de contrôle d'application et pour demander les informations de ressources de réseau à la fonction de gestion de ressources ;
dans lequel la fonction de gestion de ressources, la fonction de gestion de profil d'utilisateur et d'autorisation-authentification-comptabilité, la fonction de contrôle d'application et la fonction de contrôle de ressources et d'admission sont fournies du côté du réseau d'accès ;
dans lequel la fonction de contrôle de ressources et d'admissions est adaptée pour communiquer avec la fonction de gestion de profil d'utilisateur et d'autorisation-authentification-comptabilité avant que l'équipement utilisateur n'entre en contact avec le second noeud d'accès, pour sélectionner un noeud d'accès pour la connexion au réseau de l'équipement utilisateur à partir du premier noeud d'accès et du second noeud d'accès sur la base des informations de requête de service et des informations de ressources de réseau, et pour réserver une ressource de transport disponible pour l'équipement utilisateur sur le noeud d'accès sélectionné.

2. Système selon la revendication 1, dans lequel la fonction de contrôle de ressources et d'admissions est adaptée pour initier un passage de l'équipement utilisateur depuis le premier noeud d'accès vers le second noeud d'accès lorsque la ressource de transport actuellement disponible a une valeur inférieure à une première valeur de ressource prédéterminée et/ou ledit second noeud d'accès fournit plus de ressource de transport pour la connexion du service de communication que la ressource de transport actuellement disponible.

3. Système selon l'une quelconque des revendications précédentes, dans lequel la fonction de contrôle de ressources et d'admissions est adaptée pour restreindre le trafic d'un service de communication de priorité plus basse lorsqu'une ressource de transport d'un service de communication de priorité plus élevée est inférieure à une deuxième valeur de ressource prédéterminée.

4. Système selon l'une quelconque des revendications précédentes, dans lequel la fonction de contrôle de ressources et d'admissions est adaptée pour se déclencher pour adapter un paramètre de service en fonction de la ressource de transport actuelle et/ou la préférence de l'utilisateur en fonction d'un modèle d'activité prédéterminé décrit dans des paramètres de service.

5. Système selon l'une quelconque des revendications précédentes, dans lequel la fonction de contrôle de ressources et d'admissions est adaptée pour mettre fin à une connexion à la session dudit service de communication lorsqu'une valeur de ressource surveillée est inférieure à une troisième valeur de ressource prédéterminée.

6. Système selon les revendications 3 ou 5, dans lequel la première, la deuxième et la troisième valeur de ressource prédéterminée ont la même valeur.

7. Système selon la revendication 2, dans lequel la première et la deuxième connexion au réseau sont basées sur la même technologie d'accès ou sur des technologies d'accès différentes.

8. Système selon l'une quelconque des revendications précédentes, dans lequel la fonction de gestion de profil d'utilisateur et d'autorisation-authentification-comptabilité est adaptée pour demander à l'équipement utilisateur de reconfigurer ou modifier l'interface actuelle.

9. Système selon l'une quelconque des revendications précédentes, dans lequel la fonction de gestion de profil d'utilisateur et d'autorisation-authentification-comptabilité est adaptée pour contenir des informations indiquant quelle fonction de gestion des ressources est responsable pour l'équipement utilisateur.

10. Système selon l'une quelconque des revendications précédentes, dans lequel la fonction de contrôle des ressources d'accès et des admissions comprend un moyen pour gérer l'interface réseau.

11. Système selon l'une quelconque des revendications précédentes, comprenant en outre un sous-système d'attachement au réseau basé sur le "Network Attachment Subsystem", NASS, défini par la norme européenne de télécommunication "Telecommunications and Internet converged Services and Protocols for Advanced Networking".

12. Système selon la revendication 11, dans lequel le sous-système d'attachement au réseau comprend un moyen d'évaluation et de commande de l'interface réseau.

13. Système selon l'une quelconque des revendications précédentes, comprenant en outre un sous-système de contrôle de ressources et d'admissions, RACS, défini par la norme européenne de télécommunication "Telecommunications and Internet converged Services and Protocols for Advanced Networking".

14. Système selon la revendication 13, dans lequel l'équipement utilisateur comprend une pluralité d'interfaces réseau et le sous-système de contrôle de ressources et d'admissions comprend un moyen de sélection d'une interface réseau parmi la pluralité d'interfaces réseau pour le service de communication.

15. Procédé de gestion d'un service de communication pendant une connexion au réseau ou à la session dans des réseaux de communication ayant un premier et un second noeud d'accès et utilisant des technologies d'accès multiple, le service de communication étant utilisé par un équipement utilisateur comprenant au moins une interface réseau, dans lequel l'équipement utilisateur est connecté et a accès au premier noeud d'accès, lequel procédé comprend l'étape consistant à :
surveiller les ressources de réseau disponibles pour la connexion au réseau ou à la session qui sont utilisables pour ledit service de communication par une fonction de gestions de ressources ;
**caractérisé par** les étapes consistant à :
stocker des informations sur un profil d'utilisateur et un paramètre de connectivité d'une interface réseau d'un équipement utilisateur, par une fonction de gestion de profil d'utilisateur et d'autorisation-authentification-comptabilité ;
fournir des informations de requête de service par une fonction de contrôle d'application ;
recevoir les informations de requête de service de la fonction de contrôle d'application et demander les informations de ressources de réseau à la fonction de gestion de ressources, par une fonction de contrôle de ressources et d'admissions ;
communiquer avec la fonction de gestion de profil d'utilisateur et d'autorisation-authentification-comptabilité par la fonction de contrôle de ressources et d'admissions avant que l'équipement utilisateur n'entre en contact avec le second noeud d'accès, sélectionner un noeud d'accès pour la connexion au réseau de l'équipement utilisateur à partir du premier noeud d'accès et du second noeud d'accès sur la base des informations de requête de service et des informations de ressources de réseau par la fonction de contrôle de ressources et d'admissions, et réserver une ressource de transport disponible pour l'équipement utilisateur sur le noeud d'accès sélectionné, par la fonction de gestion des ressources,
la fonction de gestion des ressources, la fonction de gestion de profil d'utilisateur et d'autorisation-authentification-comptabilité, la fonction de contrôle d'application et la fonction de contrôle de ressources et d'admissions étant fournies du côté du réseau d'accès.

16. Procédé selon la revendication 15, comprenant en outre les étapes consistant à :
initier un passage depuis le premier noeud d'accès vers le second noeud d'accès lorsque la ressource de transport actuellement disponible a une valeur inférieure à une première valeur de ressource prédéterminée et/ou ledit second noeud d'accès fournit plus de ressource de transport pour la connexion du service de communication que la ressource de transport actuellement disponible ; et/ou
restreindre le trafic d'un service de communication de priorité plus basse lorsqu'une ressource de transport d'un service de communication de priorité plus élevée est inférieure à une deuxième valeur de ressource prédéterminée ; et/ou
adapter un paramètre de service en fonction de la ressource de transport actuelle et/ou la préférence de l'utilisateur en fonction d'un modèle d'activité prédéterminé décrit dans des paramètres de service ; et/ou
mettre fin à une connexion à la session dudit service de communication lorsqu'une valeur de ressource surveillée est inférieure à une troisième valeur de ressource prédéterminée.

17. Procédé selon les revendications 15 ou 16, dans lequel une valeur de ressource prédéterminée est une exigence minimale pour fournir le service de communication avec une qualité prédéfinie.

18. Procédé selon l'une quelconque des revendications 15 à 17, dans lequel la première, la deuxième et la troisième valeur de ressource prédéterminée ont la même valeur.

19. Procédé selon l'une quelconque des revendications 15 à 18, dans lequel la première et la deuxième connexion au réseau sont basées sur la même technologie d'accès ou sur des technologies d'accès différentes.

20. Procédé selon l'une quelconque des revendications 15 à 19, lequel procédé comprend en outre une étape consistant à demander à l'équipement utilisateur de reconfigurer ou modifier l'interface actuelle, par la fonction de gestion de profil d'utilisateur et d'autorisation-authentification-comptabilité.

21. Procédé selon l'une quelconque des revendications 15 à 20, dans lequel la fonction de gestion de profil d'utilisateur et d'autorisation-authentification-comptabilité contient des informations indiquant quelle fonction de gestion des ressources est responsable pour l'équipement utilisateur.

22. Procédé selon l'une quelconque des revendications 15 à 21, dans lequel la fonction de contrôle des ressources d'accès et des admissions comprend un moyen de gestion de l'interface réseau.

23. Procédé selon l'une quelconque des revendications 15 à 22, lequel procédé comprend en outre une étape d'évaluation et de commande de l'interface réseau par un sous-système d'attachement au réseau basé sur la norme européenne de télécommunication "Telecommunications and Internet converged Services and Protocols for Advanced Networking".

24. Procédé selon l'une quelconque des revendications 15 à 23, dans lequel l'équipement utilisateur comprend une pluralité d'interfaces réseau et le procédé comprend en outre une étape de sélection d'une interface réseau parmi la pluralité d'interfaces réseau pour le service de communication par un sous-système de contrôle de ressources et d'admissions basé sur la norme européenne de télécommunication "Telecommunications and Internet converged Services and Protocols for Advanced Networking".
